# EUROPÄISCHE PATENTSCHRIFT

(11) **EP 3 388 691 B1**
(45) Veröffentlichungstag und Bekanntmachung des Hinweises auf die Patenterteilung: **08.07.2020**
(21) Anmeldenummer: 18158594.4
(22) Anmeldetag: 26.02.2018
(51) Int. Cl.: F16B 12/20, F16B 5/02, F16B 5/06, F16B 12/14, F16B 12/46, F16B 13/12

(54) **RÜCKWANDVERBINDER**
WALL PANEL CONNECTOR
CONNECTEUR FACE ARRIÈRE

(30) Priorität: 11.04.2017 DE 202017102158 U
(43) Veröffentlichungstag der Anmeldung: 17.10.2018
(73) Patentinhaber: Häfele Berlin GmbH & Co KG, 12307 Berlin (DE)
(72) Erfinder: WALZ, Rüdiger, 72149 Neustetten (DE); NITSCHMANN, Gunter, 72285 Pfalzgrafenweiler (DE)
(74) Vertreter: Kohler Schmid Möbus Patentanwälte

(56) Entgegenhaltungen:
- DE-U1- 8 331 968
- DE-U1-202008 006 607

## Beschreibung

Die Erfindung betrifft einen Rückwandverbinder zum Befestigen einer ersten Platte innerhalb einer Nut einer zweiten Platte mit einem Zapfen, der eine Aufnahmenut aufweist, und mit zwei zu beiden Seiten der Aufnahmenut vom Zapfen hochstehenden Wänden, die jeweils eine Öffnung zum Eindrehen einer Schraube aufweisen, sowie eine zugehörige Plattenanordnung.

Ein derartiger Rückwandverbinder ist beispielsweise durch die DE 20 2008 006607 U1 bekannt geworden. Dieser bekannte Rückwandverbinder umfasst einen Zapfen mit zwei von dem Zapfen hervorstehende Wände, zwischen denen eine Rückwand eines Möbels einfügbar ist und die jeweils eine Öffnung zum Eindrehen einer Schraube aufweisen.

Aus der DE 83 31 968 U1 ist weiterhin ein Rückwandverbinder bekannt, der einen Sockel mit einer Aufnahmenut und eine auf einer Seite der Aufnahmenut hochstehende Wand mit einer Öffnung zum Eindrehen einer Schraube aufweist. Der Rückwandverbinder wird mit seinem Sockel in eine in der Bodennut einer Bodenplatte angeordnete Bohrung eingepresst, wobei die Aufnahmenut des Rückwandverbinders mit der Bodennut fluchtet. Eine Rückwandplatte wird in die Bodennut und die Aufnahmenut eingesetzt und mittels einer Schraube fixiert, die über die Öffnung der Wand durch die Rückwandplatte hindurch in den Sockel eingeschraubt ist. Für ein spaltfreies Fugenbild muss die Rückwandplatte passgenau in der Aufnahmenut aufgenommen sein, d.h. die Nutbreite der Aufnahmenut muss exakt der Plattenstärke entsprechen, was wiederum den Montageaufwand beim Einsetzen der Rückwandplatte in die Aufnahmenut deutlich erhöht. Einmal in die Bohrung eingepresst, kann der Rückwandverbinder in der Bohrung meist nicht mehr verdreht werden, was aber für eine exakte Ausrichtung der Aufnahmenut zur Bodennut erforderlich wäre.

Der Erfindung liegt demgegenüber die Aufgabe zugrunde, einen Rückwandverbinder anzugeben, der eine spaltfreie Fixierung der ersten Platte in der Nut der zweiten Platte ermöglicht und in der zweiten Platte gegen Herausziehen sicher verankert werden kann.

Diese Aufgabe wird durch die Merkmale des Anspruchs 1 gelöst. Es ist insbesondere zu betonen, dass an dem Zapfen eine Wippe um eine zur Längsrichtung der Aufnahmenut parallele oder nahezu parallele Achse, die die Wippe in einen unteren Wippenarm, welcher in einer Aussparung der zylindrischen Mantelfläche des Zapfens angeordnet ist, und einen oberen Wippenarm, welcher eine der beiden hochstehenden Wände ausbildet, aufteilt, verschwenkbar zwischen einer Ausgangsstellung und einer Endstellung gelagert ist, wobei die Innenseite des oberen Wippenarms in der Ausgangsstellung gegenüber der Längsmittelebene der Aufnahmenut schräg nach außen gestellt ist und in der Endstellung parallel zur Längsmittelebene verläuft, und wobei der untere Wippenarm zumindest in der Endstellung über den Zapfen nach außen vorsteht.

Durch Einschrauben einer Schraube in die Öffnungen der beiden Wände wird die auslenkbare, zweite Wand an die erste Wand herangezogen, bis eine in die Aufnahmenut eingesetzte Rückwandplatte zwischen den beiden Wänden festgeklemmt ist. Durch das Heranziehen verschwenkt der Wippenarm nach außen, wodurch der Zapfen in einer Bohrung festgeklemmt werden kann.

Vorzugsweise steht der Wippenarm bereits in der Ausgangsstellung über den Zapfen nach außen vor. Beim Einsetzen des Rückwandverbinders in eine geringfügig kleinere Bohrung schwenkt der Wippenarm gegen die Wirkung einer elastischen Rückstellkraft entsprechend weit nach innen, so dass der so vorgespannte Wippenarm ein Herausfallen des Rückwandverbinders aus der Bohrung verhindert.

Bevorzugt ist die andere, erste Wand starr mit dem Zapfen verbunden, so dass durch das Heranziehen der auslenkbaren, zweiten Wand ein spaltfreies Fugenbild auf der Seite der ersten Wand erreicht werden kann.

Erfindungsgemäß ist die Schwenkachse der Wippe durch zwei Torsionsstege gebildet, über die die Wippe beidseitig an den Zapfen angebunden ist.

Vorzugsweise liegt der Winkel, um den die Innenseite der zweiten Wand in der Ausgangsstellung gegenüber der Längsmittelebene der Aufnahmenut schräg nach außen gestellt ist, im Bereich von 10° bis 25°, insbesondere im Bereich von 15° bis 20°, liegt. Über diesen Winkel kann insbesondere die maximale Auslenkung der Wippe vorgegeben werden.

Besonders bevorzugt weisen der Zapfen und/oder der Wippenarm an ihren Außenseiten jeweils mindestens eine, insbesondere mehrere Vorsprünge, insbesondere Umfangsrippen z.B. in Form von Krallen, auf, die sich in eine Bohrungswand eingraben können. Die Vorsprünge können beispielsweise widerhakenartig ausgebildet sein.

Bei einer besonders vorteilhaften Ausführungsform ist die Öffnung der ersten Wand durch zwei übereinander angeordnete, miteinander überlappende Öffnungen gebildet, insbesondere in Form eines oberen Vormontagekanals und eines unteren Endlagenkanals. Eine zunächst in die obere Öffnung eingeschraubte Schraube tritt, wenn ihr Schraubenkopf am oberen Öffnungsrand der oberen Öffnung nach unten ausgelenkt wird, in die untere Öffnung ein, wodurch die von der Schraube durchsetzte Rückwandplatte zusätzlich nach unten in Anlage an den Nutgrund gedrückt wird.

Die Erfindung betrifft auch eine Anordnung mit zwei miteinander verbundenen Platten, von denen die eine, erste Platte in eine Nut der anderen, zweiten Platte eingesetzt ist, und mit einem wie oben ausgebildeten Rückwandverbinder, der mit seinem Zapfen in eine in der Nut der zweiten Platte angeordnete Bohrung eingesetzt und in seine Endstellung ausgelenkt ist, wobei die in die Aufnahmenut des Rückwandverbinders eingesetzte, erste Platte zwischen den beiden Wänden des Rückwandverbinders festgeklemmt und mittels einer Schraube verschraubt ist, die über die Öffnung der ersten Wand durch die Rückwandplatte hindurch bis in die Öffnung der zweiten Wand eingeschraubt ist.

Für Möbelhersteller ist dabei von großem Vorteil, dass die Rückwandplatte nur gesägt zu werden braucht, da jegliche Bohroperationen einen zusätzlichen Fertigungsschritt auf einer separaten Maschine bedeuten. Die Herstellung der Rückwandplatten ist trotz Verwendung einer Verschraubung sehr einfach und wirtschaftlich.

Weitere Vorteile der Erfindung ergeben sich aus der Beschreibung, den Ansprüchen und der Zeichnung. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fign. 1a-1c: verschiedene Ansichten eines erfindungsgemäßen Rückwandverbinders;
- Fign. 2a, 2b: den in Fig. 1 gezeigten Rückwandverbinder in seiner Ausgangsstellung (Fig. 2a) und in seiner Endstellung (Fig. 2b), jeweils in einem Längsschnitt;
- Fig. 3: eine vergrößerte Detailansicht gemäß III in Fig. 1b; und
- Fign. 4a-4h: die Montage des erfindungsgemäßen Rückwandverbinders.

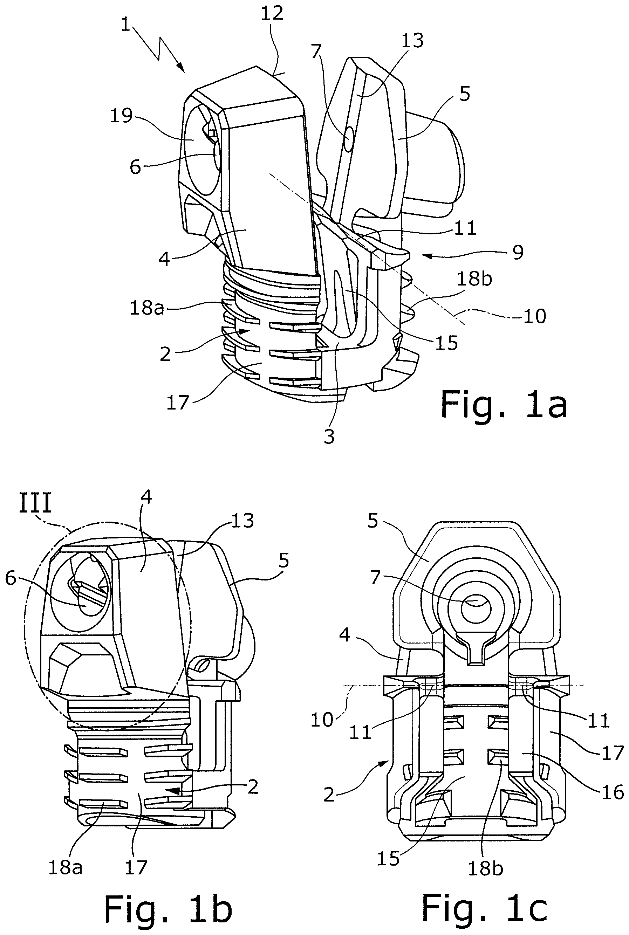

Der in **Fign. 1a-1c** gezeigte, U-förmige Rückwandverbinder **1** dient zum Befestigen einer ersten Platte innerhalb einer Nut einer zweiten Platte und ist einstückig z.B. aus Kunststoff oder Zinkdruckguss geformt.

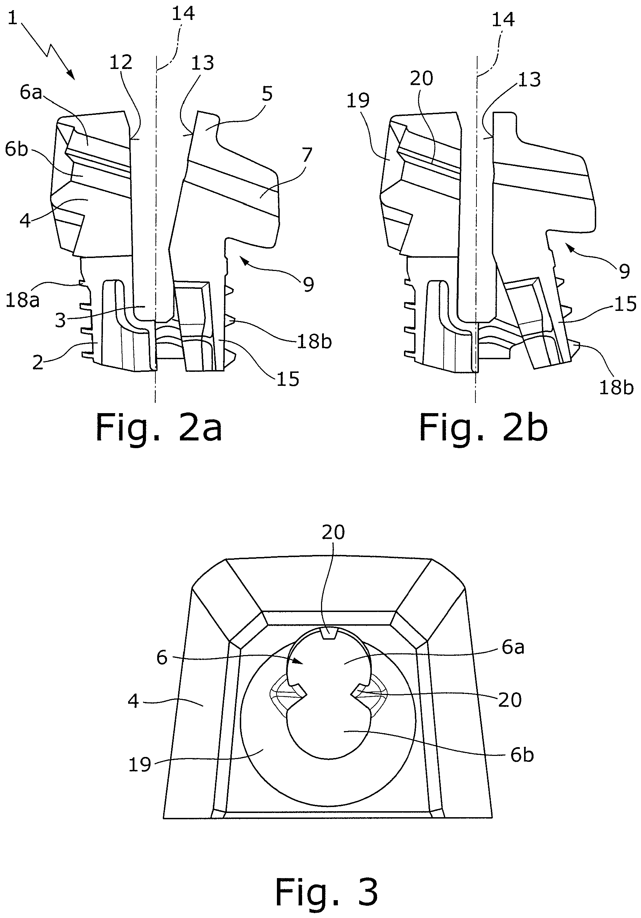

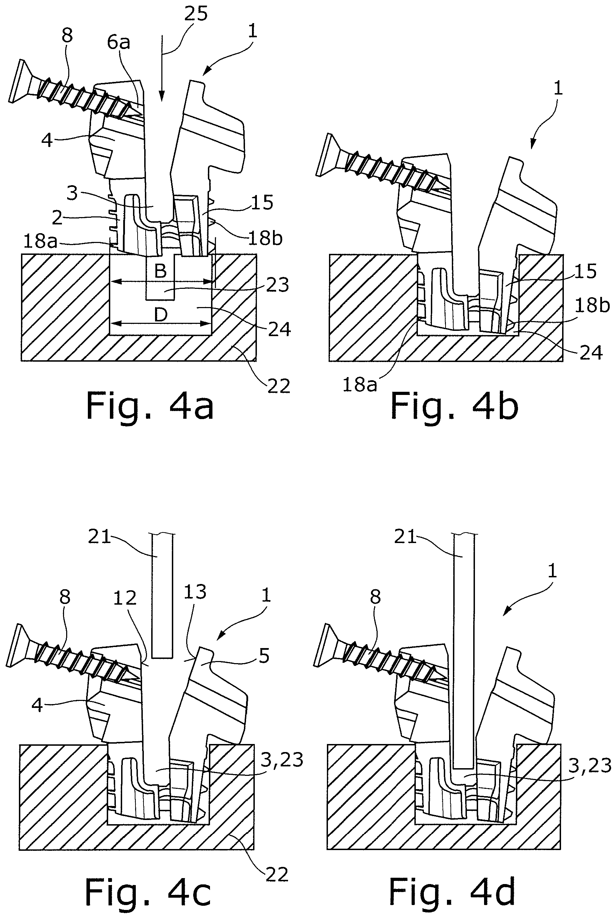

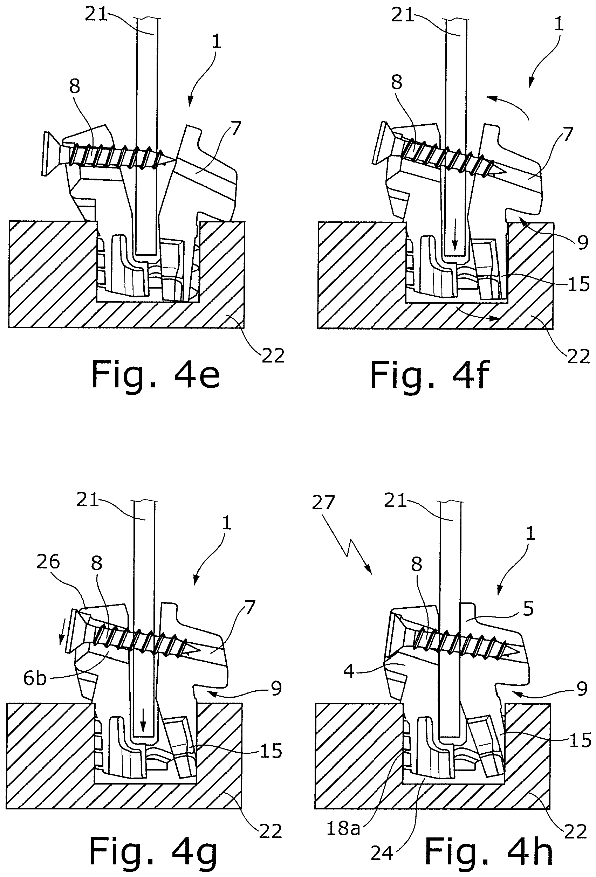

Der Rückwandverbinder 1 umfasst einen zylindrischen Zapfen **2** mit einer Aufnahmenut **3** und zwei zu beiden Seiten der Aufnahmenut 3 vom Zapfen 2 hochstehende Wände **4, 5,** die jeweils eine Öffnung **6, 7** zum Eindrehen einer Schraube **8** (Fig. 4) aufweisen. Die beiden Wände 4, 5 schließen sich jeweils absatzlos an die beiden Nutflanken der Aufnahmenut 3 an, wobei die eine, erste Wand 4 starr mit dem Zapfen 2 verbunden ist. Die andere, zweite Wand 5 bildet den einen, oberen Wippenarm einer Wippe **9,** welche an dem Zapfen 2 um eine zur Längsrichtung der Aufnahmenut 3 parallele Achse **10** verschwenkbar zwischen einer Ausgangsstellung **(****Fig. 2a****)** und einer Endstellung **(****Fig. 2b****)** gelagert ist. Die Schwenkachse 10 ist durch Torsionsstege **11** gebildet, über die die Wippe 9 mit dem Zapfen 2 verbunden ist.

Die erste Wand 4 ist starr mit dem Zapfen 2 verbunden und weist eine konvex gekrümmte Innenseite **12** auf; alternativ kann die Innenseite 12 aber auch als ebene Anlagefläche ausgebildet sein. Die Innenseite **13** der zweiten Wand 5 ist in der Ausgangsstellung gegenüber der Längsmittelebene **14** der Aufnahmenut 3 um ca. 18° schräg nach außen gestellt und verläuft in der Endstellung parallel zur Längsmittelebene 14. Die Innenseite 13 der zweiten Wand 5 ist konvex mit einer kleinen mittigen Verrundung und mit beidseitig ebenen Seitenflanken ausgebildet; alternativ kann die Innenseite 13 aber auch als ebene Anlagefläche ausgebildet sein. Der andere, untere Wippenarm **15** ist in einer Aussparung **16** der zylindrischen Mantelfläche **17** des Zapfens 2 angeordnet und steht sowohl in der Ausgangsstellung geringfügig, z.B. ca. 1mm, und in der Endstellung deutlich weiter, z.B. ca. 3mm, über die Umfangsfläche des Zapfens 2 nach außen vor. Der Zapfen 2 und der Wippenarm 10 weisen auf ihren Außenseiten jeweils mehrere Umfangsrippen in Form von Krallen **18a, 18b** auf.

Wie in **Fig. 3** gezeigt, ist die Öffnung 6 der ersten Wand 4 durch zwei miteinander überlappende Öffnungen gebildet, nämlich durch einen oberen Vormontagekanal **6a** und einen unteren Endlagenkanal **6b,** die beide außenseitig von einer konzentrisch zum Endlagenkanal 6b angeordneten Konusfläche **19** umgeben sind. In den Vormontagekanal 6a stehen, jeweils im Winkelabstand von ca. 120°, drei Rippen **20** nach innen vor.

In den **Fign. 4a-4h** ist die Montage des Rückwandverbinders 1 zum Befestigen einer Rückwandplatte **21** innerhalb einer Nut **23** einer Bodenplatte **22** gezeigt.

Die selbstschneidende Schraube 8 wird in den Vormontagekanal 6a eingeschraubt, wobei sich das Schraubengewinde in die drei Rippen 20 einschneidet. Der Rückwandverbinder 1 mit der so vormontierten Schraube 8 wird mit seinem Zapfen 2 in eine Bohrung **24** eingesetzt (Fign. 4a, 4b), die mittig in der Nut 23 der Bodenplatte 22 angeordnet ist. Da in der Ausgangsstellung die durch die Krallen 18a, 18b des Zapfens 2 und des unteren Wippenarms 15 definierte Breite **B** des Rückwandverbinders 1 größer als der Bohrungsdurchmesser **D** ist, schwenkt beim Einsetzen des Rückwandverbinders 1 der untere Wippenarm 15 gegen die Wirkung einer elastischen Rückstellkraft entsprechend weit nach innen. Der so vorgespannte, untere Wippenarm 15 verhindert ein Herausfallen des Rückwandverbinders 1 aus der Bohrung 24 ("sichere Vormontage"). Die am Zapfen 2 angeformten Krallen 18a sind in Einsetzrichtung **25** widerhakenartig angeschrägt und bilden zusätzlich einen Widerstand gegen das Herausziehen, zumal durch die Vorspannung des unteren Wippenarms 15 diese Krallen 18a gegen die Bohrungswandung gedrückt werden. Der Rückwandverbinder 1 ermöglicht somit ein leichtes Einführen, aber weist einen hohen Widerstand gegen Herausziehen auf.

Die Rückwandplatte 21 wird in die Nut 23 der Bodenplatte 22 und dabei gleichzeitig auch in die Aufnahmenut 3 des Rückwandverbinders 1 eingeführt (Fign. 4c, 4d). Aufgrund ihrer schräggestellten Innenseite 13 bildet die zweite Wand 5 zusammen mit der Innenseite 12 der ersten Wand 4 eine Einführhilfe für die Rückwandplatte 21.

Die Schraube 8 wird nun mithilfe ihrer selbstschneidenden Eigenschaft durch die ungebohrte Rückwandplatte 21 durchgeschraubt (Fig. 4e). Nach dem Durchschrauben tritt die Schraube 8 in die als Schraubkanal 7 ausgebildete Öffnung der zweiten Wand 5 ein und wird weiter in den Schraubkanal eingedreht. Dadurch wird der obere Wippenarm, also die zweite Wand 4, an die Rückwandplatte 21 herangezogen, so dass die Wippe 9 entgegen dem Uhrzeigersinn zu verschwenken und der untere Wippenarm 15 sich mit seinen Krallen 18b in die Bohrungswand einzugraben beginnt (Fig. 4f).

Wenn die Schraube 8 mit ihrem konischen Senkkopf auf den oberen Öffnungsrand **26** des Vormontagekanals 6a aufläuft, wird die Schraube 8 nach unten in den Endlagenkanal 6b ausgelenkt und dadurch auch die Rückwandplatte 21 etwas nach unten gezogen (Fig. 4g). Es erfolgt also ein beidseitiges Verspannen der Rückwandplatte 21 in der Aufnahmenut 3 in Richtung Nutgrund, d.h., die Rückwandplatte 21 wird unter Zug gesetzt. Dies verhindert ein Ausbauchen der Rückwandplatte 21 und bewirkt eine insgesamt bessere Stabilität und Optik der Plattenanordnung **27.** Der Spanneffekt in Richtung Nutgrund verhindert ebenso wirkungsvoll ein Ausbauchen der Seitenwände bei hohen Schränken ohne Konstruktionsboden (z.B. bei einem Kleiderschrank nur mit einer Kleiderstange).

Wenn die Schraube 8 festgezogen ist und mit ihrem Senkkopf an der Konusfläche 19 anliegt, ist einerseits die Innenseite 13 der zweiten Wand 5 vollständig in Anlage an die Rückwandplatte 21 herangezogen und andererseits der untere Wippenarm 15 nach außen in seine Endstellung ausgelenkt. Die Rückwandplatte 21 ist zwischen den beiden Wänden 4, 5 des Rückwandverbinders 1 festgeklemmt und verschraubt, sowie auch nach unten gezogen (verspannt). Die Krallen 18a, 18b greifen in die Bohrungswandung ein und sichern den Rückwandverbinder 1 so in der Bohrung 24, wodurch eine stabile Verbindung entsteht.

Besonders geeignet ist der Rückwandverbinder 1 für große Schränke, welche stehend aufgebaut werden, da die Montage (Schrauben) des Rückwandverbinders 1 dann von innen (d.h. von der Schrankvorderseite) erfolgt. Indem die zweite Wand 5 an die erste Wand 4 herangezogen wird, wird zudem die Rückwandplatte 21 nach vorne gezogen, wodurch sich ein spaltfreies Fugenbild auf der Schrankinnenseite ergibt.

## Patentansprüche

1. Rückwandverbinder (1) mit einem Zapfen (2), der eine Aufnahmenut (3) aufweist, und mit zwei zu beiden Seiten der Aufnahmenut (3) vom Zapfen (2) hochstehenden Wänden (4, 5), die jeweils eine Öffnung (6, 7) zum Eindrehen einer Schraube (8) aufweisen,
**dadurch gekennzeichnet,**
**dass** eine der beiden Wände (4, 5) den einen Arm einer Wippe (9) ausbildet, welche an dem Zapfen (2) um eine zur Längsrichtung der Aufnahmenut (3) parallele oder nahezu parallele Achse (10) verschwenkbar zwischen einer Ausgangsstellung und einer Endstellung gelagert ist, dass die Schwenkachse (10) der Wippe (9) durch zwei Torsionsstege (11) gebildet ist, über die die Wippe (9) beidseitig an den Zapfen (2) angebunden ist, dass die Innenseite (13) der einen, zweiten Wand (5) in der Ausgangsstellung gegenüber der Längsmittelebene (14) der Aufnahmenut (3) schräg nach außen gestellt ist und in der Endstellung parallel zur Längsmittelebene (14) verläuft, und dass ein anderer Wippenarm (15) zumindest in der Endstellung über den Zapfen (2) nach außen vorsteht.

2. Rückwandverbinder nach Anspruch 1, **dadurch gekennzeichnet, dass** der Wippenarm (15) auch in der Ausgangsstellung über den Zapfen (2) nach außen vorsteht.

3. Rückwandverbinder nach Anspruch 1 oder 2, **dadurch gekennzeichnet, dass** der Wippenarm (15) in einer Aussparung (16) einer mantelseitigen Wand (17) des Zapfens (2) angeordnet ist.

4. Rückwandhalter nach einem der vorhergehenden Ansprüche, **dadurch gekennzeichnet, dass** die andere, erste Wand (4) starr mit dem Zapfen (2) verbunden ist.

5. Rückwandverbinder nach einem der vorhergehenden Ansprüche, **dadurch gekennzeichnet, dass** der Winkel, um den die Innenseite (13) der zweiten Wand (5) in der Ausgangsstellung gegenüber der Längsmittelebene (14) der Aufnahmenut (3) schräg nach außen gestellt ist, im Bereich von 10° bis 25°, insbesondere im Bereich von 15° bis 20°, liegt.

6. Rückwandverbinder nach einem der vorhergehenden Ansprüche, **dadurch gekennzeichnet, dass** der Zapfen (2) und/oder der Wippenarm (15) an ihren Außenseiten jeweils mindestens eine, insbesondere mehrere Vorsprünge (18a, 18b) aufweisen.

7. Rückwandverbinder nach einem der vorhergehenden Ansprüche, **dadurch gekennzeichnet, dass** die Öffnung (6) der ersten Wand (4) durch zwei übereinander angeordnete, miteinander überlappende Öffnungen (6a, 6b), insbesondere in Form eines oberen Vormontagekanals und eines unteren Endlagenkanals, gebildet ist.

8. Rückwandverbinder nach Anspruch 7, **dadurch gekennzeichnet, dass** in der Ausgangsstellung der obere Vormontagekanal (6a) auf die Öffnung (7) der zweiten Wand (5) gerichtet ist.

9. Rückwandverbinder nach Anspruch 7 oder 8, **dadurch gekennzeichnet, dass** die beiden überlappenden Öffnungen (6a, 6b) der ersten Wand (4) außenseitig von einer konzentrisch zur unteren Öffnung (6b) angeordneten Konusfläche (19) umgeben sind.

10. Rückwandverbinder nach einem der vorhergehenden Ansprüche, **dadurch gekennzeichnet, dass** eine Schraube (8) in die Öffnung (6) der ersten Wand (4) eingeschraubt ist.

11. Anordnung (27) mit zwei miteinander verbundenen Platten (21, 22), von denen die eine, erste Platte (21) in eine Nut (23) der anderen, zweiten Platte (22) eingesetzt ist, und mit einem Rückwandverbinder (1) nach einem der vorhergehenden Ansprüche, der mit seinem Zapfen (2) in eine in der Nut (23) der zweiten Platte (22) angeordnete Bohrung (24) eingesetzt und in seine Endstellung ausgelenkt ist, wobei die in die Aufnahmenut (3) des Rückwandverbinders (1) eingesetzte, erste Platte (21) zwischen den beiden Wänden (4, 5) des Rückwandverbinders (1) festgeklemmt und mittels einer Schraube (8) verschraubt ist, die über die Öffnung (6) der ersten Wand (4) durch die Rückwandplatte (21) hindurch bis in die Öffnung (7) der zweiten Wand (5) eingeschraubt ist.

## Claims

1. Rear wall connector (1) comprising a stud (2), which has a receiving groove (3), and two walls (4, 5) standing up from the stud (2) on both sides of the receiving groove (3), which each have an opening (6, 7) for screwing in a screw (8),
**characterized in that**
one of the two walls (4, 5) forms one arm of a rocker (9) which is mounted on the stud (2) such that it is pivotable between a starting position and an end position about an axis (10) which is parallel or almost parallel to the longitudinal direction of the receiving groove (3),
the pivot axis (10) of the rocker (9) is formed by two torsion webs (11) via which the rocker (9) is attached to the stud (2) on both sides,
the inside (13) of the one, second wall (5) is positioned obliquely outwards with respect to the longitudinal centre plane (14) of the receiving groove (3) in the starting position and extends parallel to the longitudinal centre plane (14) in the end position, and
the other rocker arm (15) projects outwards over the stud (2), at least in the end position.

2. Rear wall connector according to claim 1, **characterized in that** the rocker arm (15) also projects outwards over the stud (2) in the starting position.

3. Rear wall connector according to claim 1 or 2, **characterized in that** the rocker arm (15) is arranged in a recess (16) of a lateral-surface wall (17) of the stud (2).

4. Rear wall connector according to one of the preceding claims, **characterized in that** the other, first wall (4) is rigidly connected to the stud (2).

5. Rear wall connector according to one of the preceding claims, **characterized in that** the angle through which the inside (13) of the second wall (5) is positioned obliquely outwards with respect to the longitudinal centre plane (14) of the receiving groove (3) in the starting position is in the range of 10° to 25°, in particular in the range of 15° to 20°.

6. Rear wall connector according to one of the preceding claims, **characterized in that** the stud (2) and/or the rocker arm (15) each have at least one projection, in particular a plurality of projections (18a, 18b), on their outsides.

7. Rear wall connector according to one of the preceding claims, **characterized in that** the opening (6) of the first wall (4) is formed by two mutually overlapping openings (6a, 6b) arranged above one another, in particular in the form of an upper pre-assembly channel and a lower end position channel.

8. Rear wall connector according to claim 7, **characterized in that** the upper pre-assembly channel (6a) is directed towards the opening (7) of the second wall (5) in the starting position.

9. Rear wall connector according to claim 7 or 8, **characterized in that** the two overlapping openings (6a, 6b) of the first wall (4) are surrounded on the outside by a cone surface (19) arranged concentrically to the lower opening (6b).

10. Rear wall connector according to one of the preceding claims, **characterized in that** a screw (8) is screwed into the opening (6) of the first wall (4).

11. Arrangement (27) comprising two mutually connected panels (21, 22) of which the one, first panel (21) is inserted into a groove (23) of the other, second panel (22), and a rear wall connector (1) according to one of the preceding claims, which is inserted with its stud (2) into a bore (24) arranged in the groove (23) of the second panel (22) and is deflected into its end position, wherein the first panel (21), which is inserted into the receiving groove (3) of the rear wall connector (1), is clamped between the two walls (4, 5) of the rear wall connector (1) and is screwed in place by means of a screw (8) which is screwed through the rear wall panel (21) via the opening (6) of the first wall (4) and into the opening (7) of the second wall (5).

## Revendications

1. Pièce (1) d'assemblage de parois postérieures, comprenant un tenon (2) pourvu d'une rainure réceptrice (3), et deux parois (4, 5) qui se dressent à partir dudit tenon (2) de part et d'autre de ladite rainure réceptrice (3), et sont respectivement percées d'un orifice (6, 7) en vue du vissage d'une vis (8),
**caractérisée par le fait**
**que** l'une des deux parois (4, 5) forme l'un des bras d'une pièce basculante (9) apte à pivoter sur le tenon (2) entre une position de départ et une position finale, autour d'un axe (10) parallèle ou approximativement parallèle à la direction longitudinale de la rainure réceptrice (3) ; par le fait que l'axe de pivotement (10) de la pièce basculante (9) est constitué de deux membrures de torsion (11) par l'intermédiaire desquelles ladite pièce basculante (9) est rattachée audit tenon (2), de part et d'autre ; par le fait que la face interne (13) de l'une des parois, ou seconde paroi (5), pointe à l'oblique vers l'extérieur par rapport au plan médian longitudinal (14) de la rainure réceptrice (3), dans la position de départ, et s'étend parallèlement audit plan médian longitudinal (14) dans la position finale ; et par le fait qu'un autre bras (15) de la pièce basculante fait saillie vers l'extérieur au-delà du tenon (2), au moins dans ladite position finale.

2. Pièce d'assemblage de parois postérieures, selon la revendication 1, **caractérisée par le fait que**, dans la position de départ également, le bras (15) de la pièce basculante fait saillie vers l'extérieur au-delà du tenon (2).

3. Pièce d'assemblage de parois postérieures, selon la revendication 1 ou 2, **caractérisée par le fait que** le bras (15) de la pièce basculante est logé dans un évidement (16) d'une paroi (17) située côté enveloppe du tenon (2).

4. Pièce d'assemblage de parois postérieures, selon l'une des revendications précédentes, **caractérisée par le fait que** l'autre paroi, ou première paroi (4), est reliée rigidement au tenon (2).

5. Pièce d'assemblage de parois postérieures, selon l'une des revendications précédentes, **caractérisée par le fait que** l'angle, suivant lequel la face interne (13) de la seconde paroi (5) pointe à l'oblique vers l'extérieur par rapport au plan médian longitudinal (14) de la rainure réceptrice (3), dans la position de départ, se situe dans la plage de 10° à 25°, en particulier dans la plage de 15° à 20°.

6. Pièce d'assemblage de parois postérieures, selon l'une des revendications précédentes, **caractérisée par le fait que** le tenon (2), et/ou le bras (15) de la pièce basculante, est (sont) respectivement pourvu(s) d'au moins une, en particulier de plusieurs protubérances (18a, 18b) sur sa (leur) face(s) externe(s).

7. Pièce d'assemblage de parois postérieures, selon l'une des revendications précédentes, **caractérisée par le fait que** l'orifice (6) de la première paroi (4) est constitué de deux orifices (6a, 6b) placés en superposition et se chevauchant mutuellement, en particulier sous la forme d'un canal supérieur de montage préalable et d'un canal inférieur de position définitive.

8. Pièce d'assemblage de parois postérieures, selon la revendication 7, **caractérisée par le fait que** le canal supérieur (6a) de montage préalable est dirigé vers l'orifice (7) de la seconde paroi (5) dans la position de départ.

9. Pièce d'assemblage de parois postérieures, selon la revendication 7 ou 8, **caractérisée par le fait que** les deux orifices (6a, 6b) de la première paroi (4), placés en chevauchement, sont entourés extérieurement par une surface tronconique (19) disposée concentriquement à l'orifice (6b) inférieur.

10. Pièce d'assemblage de parois postérieures, selon l'une des revendications précédentes, **caractérisée par le fait qu'**une vis (8) est vissée dans l'orifice (6) de la première paroi (4).

11. Agencement (27) comprenant deux panneaux (21, 22) reliés l'un à l'autre et au sein desquels l'un desdits panneaux, ou premier panneau (21), est inséré dans une saignée (23) de l'autre panneau, ou second panneau (22), et une pièce (1) d'assemblage de parois postérieures conforme à l'une des revendications précédentes, qui est introduite, par son tenon (2), dans un perçage (24) situé dans ladite saignée (23) du second panneau (22) et est déviée vers sa position finale, sachant que le premier panneau (21), inséré dans la rainure réceptrice (3) de la pièce (1) d'assemblage de parois postérieures, est coincé fermement entre les deux parois (4, 5) de ladite pièce (1) d'assemblage de parois postérieures et est vissé au moyen d'une vis (8) engagée jusque dans l'orifice (7) de la seconde paroi (5), par l'intermédiaire de l'orifice (6) de la première paroi (4), en traversant de part en part le panneau (21) de cloisonnement postérieur.
